**Europäisches Patentamt**

**European Patent Office**

**Office européen des brevets**

(11) Veröffentlichungsnummer: **0 026 259**

**A1**

# (12) EUROPÄISCHE PATENTANMELDUNG

(21) Anmeldenummer: **80102927.3**

(22) Anmeldetag: **24.05.80**

(51) Int. Cl.³: **C 01 B 25/237**

(30) Priorität: **26.09.79 DE 2938850**

(43) Veröffentlichungstag der Anmeldung:
**08.04.81 Patentblatt 81/14**

(84) Benannte Vertragsstaaten:
**BE DE FR GB NL**

(71) Anmelder: **Uhde GmbH**
**Deggingstrasse 10 - 12**
**D-4600 Dortmund 1(DE)**

(72) Erfinder: **Wolstein, Friedrich, Dr., Dipl.-Chem**
**Goethe-Strasse 66**
**D-4300 Essen(DE)**

(72) Erfinder: **Koch, Gerhard, Dr. Dipl.-Chem.**
**Alter Schulweg 12**
**D-3072 Marklohe(DE)**

(74) Vertreter: **Patentanwälte Meinke und Dabringhaus**
**Westhellweg 67**
**D-4600 Dortmund 1(DE)**

(54) Verfahren zur Entfluorierung von Phosphorsäure und danach hergestellte Phosphorsäure.

(57) Bei einem Verfahren der Entfluorierung von Phosphorsäure durch Zusatz von aktivem porösem Kieselgel ($SiO_2$), soll zur Vermeidung eines großen Energiebedarfes und insbesondere mit einfachen Mitteln der Fluorgehalt in der Phosphorsäure am Ende des Konzentrationsprozesses auf weniger als 0,1 % gesenkt werden.

Dies wird dadurch erreicht, daß ein Kieselgel mit einem mittleren Porendurchmesser zwischen 50 Å und 1000 Å eingesetzt wird.

EP 0 026 259 A1

- 1 -

0026259

Die Erfindung richtet sich auf ein Verfahren zur Entfluorierung von Phosphorsäure durch Zusatz von aktivem porösem Kieselgel.

Bei dem breiten Feld des Einsatzes von Phosphorsäure, z.B. in der Futtermittel- oder der Waschmittelindustrie, ist es erwünscht bzw. notwendig, den Fluorgehalt in der Phosphorsäure möglichst gering zu halten. Auch ist ein niedriger F-Gehalt deshalb erwünscht, um die Korrosion der Teile zu vermeiden, die mit der Phosphorsäure in Berührung kommen.

Es sind bereits eine Reihe von Verfahren bekannt, den Fluorgehalt der Phosphorsäure zu senken. So ist beispielsweise aus der DE-AS 11 48 531 ein Verfahren bekannt, bei dem durch eine phosphathaltige Lösung mit mindestens 48 % $P_2O_5$ heiße Verbrennungsgase und gleichzeitig Wasserdampf geleitet werden. Ein ähnliches Verfahren ist auch aus der US-PS 2 977 196 bekannt.

Aus der DD-PS 30 306 ist ein weiteres Verfahren bekannt, bei dem vor dem Erhitzen zur Konzentration der Phosphorsäure fein verteilte Kieselsäure zugesetzt wird, um zu erreichen, daß das vorhandene Fluor weitgehend in Siliziumtetrafluorid umgewandelt wird, welches beim Sieden der Säure ausgetrieben wird.

Daneben ist es auch bekannt, $SiO_2$ als Kieselgur, Wasserglas, Diatomeenerde u. dgl. vor der Konzentration der Phosphorsäure zuzusetzen und dabei werden dann Alkalisilikofluoride in der Phosphorsäure ausgefällt und/oder flüchtige Silikofluoride gebildet (US-PS 3 193 351). Es ist auch bekannt, Alkali- oder Erdalkaliverbindungen der verdünnten und/oder konzentrierten Phosphorsäure ggf. in Kombination mit einer $SiO_2$-Zugabe zuzusetzen und entsprechende Alkali- bzw. Erdalkalisilikofluoride auszufällen.

Bei Zusatz von Wasserglas verläuft die Reaktion der in der Phosphorsäure gelösten Fluoride oder der Flußsäure unter Bildung von Silikofluoriden, die entweder mit dem Alkali des Wasserglases ausfallen und/oder als $SiF_4$ bzw. $H_2SiF_6$ gasförmig entweichen. Diese Reaktion führt zu einem Gleichgewicht, das bei etwa 0,4 % F in der Phosphorsäure mit 54 % $P_2O_5$ liegt.

Bek-annt ist auch, daß viele Rohphosphate hohe $SiO_2$-GEhalte besitzen. Beim Aufschluß dieser Rohphospahte mit Schwefelsäure werden diese $SiO_2$-Verbindungen, sofern sie nicht aus Quarz bestehen, gelöst.

Bei der Konzentrierung einer Phosphorsäure, die aus einem solchen Rohphosphat hergestellt wurde, wird der F-Gehalt nur minimal erniedrigt.

Die bekannten Verfahren sind in der Regel sehr aufwendig, haben einen großen Energieverbrauch und vermögen den Fluorgehalt nicht auf das gewünschte niedrige Niveau zu senken.

Aufgabe der Erfindung ist die Schaffung einer Lösung, mit der mit einfachen Mitteln der Fluorgehalt in der Phosphorsäure am Ende des Konzentrationsprozesses auf weniger als 0,1 % gesenkt wird.

Mit einem Verfahren der eingangs bezeichneten Art wird diese Aufgabe gemäß der Erfindung dadurch gelöst, daß ein Kieselgel mit einem mittleren Porendurchmesser in einem Bereich von 50 Å bis 1000 Å verwendet wird.

Es ist bereits bekannt, durch Zugabe von festem $SiO_2$ als Naturprodukt (Diatomeenerde) oder als im Handel erhältliches sogenanntes Aktiv-Silicagel, den Fluorgehalt zu senken, jedoch ist der Fluorgehalt bei Verwendung praktisch porenfreiem, festen $SiO_2$ immer noch vergleichsweise hoch, er liegt im Bereich von 0,2 %.

Durch die Erfindung wird demgegenüber ein Absenken des F-Gehaltes in der Produkt-Phosphorsäure von unter 0,1 % erreicht.

Ein besonderes Merkmal der Erfindung besteht darin, daß die Porendurchmesser in einem Bereich von 50 Å bis 200 Å liegen.

Mit dem Einsatz des erfindungsgemäßen Kieselgeles lassen sich F-Gehalte in der Phosphorsäure von weit unter 0,1 % erreichen.

Der Wirkmechanismus besteht im wesentlichen darin, daß in Poren durch die Spreizung des Kristallgitters die Si-Atome angeregt sind und dann leichter mit Fluorverbindungen reagieren. Darüber hinaus kann in besonders weiten Poren die viskose Phosphorsäure besser eindringen.

Die Erfindung ist nicht auf den Einsatz bei einem bestimmten Ausgangsprodukt beschränkt. Sie kann bei Rohphosphaten mit einem hohen $SiO_2$-Gehalt ebenso eingesetzt werden, wie bei anderen Konzentrationsverfahren von Phosphorsäure, unabhängig von dem jeweils vorliegenden F-Gehalt.

Die folgenden Beispiele sollen die Erfindung näher erläutern:

Beispiel 1: 1000 kg Phosphorsäure mit 28 % $P_2O_5$, 1.05 % $SO_3$, 0,46 % MgO, 0,45 % $SiO_2$ und 1,69 % F werden ohne weiteren Zusatz einer Substanz mit einem $SiO_2$-Gehalt auf eine $P_2O_5$-Konzentration von 54 % eingedampft, dabei vermindert sich der F-Gehalt auf 0,67 %. Danach sind von 16,9 kg F in der Ausgangssäure (28 % $P_2O_5$) noch 3,5 kg F in der Säure mit 54 % $P_2O_5$ vorhanden.

Beispiel 2: 1000 kg Phosphorsäure (28 % $P_2O_5$) mit gleicher Zusammensetzung wie unter 1) angegeben, werden mit 55,6 kg Wasserglaslösung ( 27 % $SiO_2$) versetzt und auf eine $P_2O_5$-Konzentration von 54 % eingedampft, dabei vermindert sich die F-Konzentration auf 0,4 % durch Verflüchtigung von $SiF_4$ bzw. $H_2SiF_6$ bzw. Ausfällung von Silicofluoriden.

Beispiel 3: 1000 kg Phosphorsäure (28 % $P_2O_5$) mit gleicher Zusammensetzung wie unter 1) angegeben, werden unter Zugabe von 24 KG Diatomeenerde 58 % $SiO_2$ auf eine $P_2O_5$-Konzentration von 54 % eingedampft; dabei vermindert sich die F-Konzentration auf 0,22 % durch Verflüchtigung von $SiF_4$ bzw. $H_2SiF_6$.

Beispiel 4: 1000 kg Phosphorsäure (28 % $P_2O_5$) mit gleicher Zusammensetzung wie unter 1) angegeben, werden unter Zugabe von 12 kg Kieselgel (99 % $SiO_2$) mit einem mittleren Porendurchmesser unter 50 Å auf eine $P_2O_5$-Konzentration von 54 % eingedampft; dabei vermindert sich die F-Konzentration auf 0,18 %.

Beispiel 5: 1000 kg Phosphorsäure (28 % $P_2O_5$) mit gleicher Zusammensetzung wie unter 1) angegeben, werden unter Zugabe von 12 kg Kieselgel (99 % $SiO_2$) mit einem mittleren Porendurchmesser von 150 Å auf eine $P_2O_5$-Konzentration von 54 % eingedampft; dabei vermindert sich die F-Konzentration auf 0,09 %.

**0026259**

Patentansprüche :

1. Verfahren zur Entfluorierung von Phosphorsäure durch Zusatz von aktivem porösem Kieselgel ($SiO_2$), dadurch gekennzeichnet, daß ein Kieselgel mit einem mittleren Porendurchmesser in einem Bereich von 50 Å bis 1000 Å verwendet wird.

2. Verfahren nach Anspruch 1, dadurch gekennzeichnet, daß die mittleren Porendurchmesser in einem Bereich von 50 Å bis 200 Å liegen.

3. Nach dem Naßphosphorsäure-Verfahren hergestellte Phosphorsäure mit einem Fluorgehalt von weniger als 0,1 Gew.-%.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 212 576 (AMERICAN CYANAMID)  * Anspruch 4; Beispiel 11 *  -- | 1 |
| | US - A - 2 132 349 (C.F. BOOTH)  * Seite 2, linke Spalte, Zeilen 30 bis 37 *  -- | 1 |
| | US - A - 2 123 785 (W.H. KNOX, JR., et al.)  * Seite 1, linke Spalte, Zeilen 35 bis 41 *  -- | 1 |
| | DE - A1 - 2 459 659 (NATIONAL DISTILLERS AND CHEMICAL CORP.)  * Anspruch 1 *  -- | 1 |
| D | DE - B - 1 148 531 (INTERNATIONAL MINERALS & CHEMICAL CO.)  -- | |
| D | DD - A - 30 306 (H. WÖCKEL)  -- | |
| D | US - A - 3 193 351 (F.D. MILLER et al.)  -- | |
| D | US - A - 2 977 196 (R.C. FLEMING, JR.)  ---- | |

**KLASSIFIKATION DER ANMELDUNG (Int. Cl.³)**

C 01 B 25/237

**RECHERCHIERTE SACHGEBIETE (Int. Cl.³)**

C 01 B 25/00
C 01 B 33/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 23-12-1980 | KESTEN |

EPA form 1503.1  06.78